Europäisches Patentamt

European Patent Office

Office européen des brevets

(19)

(11) Publication number: 0 109 462
A1

(12) **EUROPEAN PATENT APPLICATION**

(21) Application number: 82201462.7

(22) Date of filing: 17.11.82

(51) Int. Cl.³: **B 62 D 33/06**

(43) Date of publication of application:
30.05.84 Bulletin 84/22

(84) Designated Contracting States:
CH DE FR GB IT LI NL SE

(71) Applicant: Applied Power Inc.
250 Executive Drive
Brookfield Wisconsin 53005(US)

(72) Inventor: Sonneborn, Lambertus Johannes
Waterhamskamp 15
7576 EM Oldenzaal(NL)

(74) Representative: Boelsma, Gerben Harm, Ir.
Octrooibureau Polak & Charlouis Laan Copes van
Cattenburch 80
NL-2585 GD Den Haag(NL)

(54) A hydraulic piston cylinder apparatus, particularly for a pivotable cab of a motor vehicle.

(57) A hydraulic piston cylinder apparatus (20), particularly suitable for moving a pivotable cab of a motor vehicle between a drive position and a pivoted position, comprising a by-pass conduit (26), mutually connecting the cylinder spaces at both sides of the piston (36), during part of the piston stroke. A remotely actuatable valve device (52), is provided in the by-pass conduit (26).

FIG. 6

EP 0 109 462 A1

A hydraulic piston cylinder apparatus particularly for a pivotable cab of a motor vehicle.

The invention relates to a hydraulic piston cylinder apparatus particularly suitable for moving a pivotable cab of a motor vehicle between a drive position and a pivoted position, comprising a by-pass conduit mutually connecting the cylinder spaces at both sides of the piston at least during part of the piston stroke.

Such piston cylinder apparatus are known, e.g. from the German Offenlegungsschrift 2.030.450 and the Dutch patent 161.401.

In said known apparatus the by-pass conduit as present offers among others the advantage that the piston is permitted in the zone around its retracted position (corresponding to the drive position of the cab) to carry out a certain a certain lost motion movement whereby the cab permits during driving, when the hydraulic pump has been switched off, a certain elastic motion of the cab relative to the vehicle chassis.

The effect of said by-pass conduit therein depends considerably on the manner in which the hydraulic piston cylinder apparatus has been connected in the hydraulic circuit, namely on the question whether this circuit is a so-called regenerative system or a conventional system.

The invention aims at improving the known hydraulic piston cylinder apparatus such that it may be applied with equal advantage in a regenerative system as well as in a non-regenerative system.

This purpose is achieved according to the invention in that a remotely actuable valve device is provided in the by-pass conduit whereby the by-pass conduit may be selectively opened and closed.

In a practical embodiment a valve device is used which is provided with a connection for an operative fluid for moving the valve closure element to the open position, a resetting mechanism simultaneously acting on the valve closure element which normally pushes said closure element to its closed position.

As the operating fluid e.g. the compressed air of the air brake system which is usual in trucks could be used such that the compressed air of this system automatically acts on the valve closure element of the valve device in the by-pass circuit in the drive position of the vehicle so that the closure element and thereby the by-pass conduit are open on behalf of the elastic movement of the cab relative to the chassis. In the parking condition of the vehicle, however, the compressed air supply is closed whereby the valve closure element is closed under the influence of the resetting mechanism, e.g. a spring and the by-pass conduit can in no way influence the manner in which the pivoting movement takes place in the parking condition.

The invention is hereunder further illustrated with reference to the drawing of an embodiment, given as an example.

Fig. 1 is a side view of the front portion of a tractor vehicle having a pivotable cab;

Fig. 2 is an end view of the hydraulic piston cylinder apparatus according to the invention applied for pivoting the cab of the tractor vehicle according to Fig. 1;

Fig. 3 is a cross-section according to the line III-III in Fig. 2;

Fig. 4 is a section on an enlarged scale of part of the piston cylinder apparatus shown in Fig. 3;

Fig. 5 is a section according to the line V-V in Fig. 3 and

Fig. 6 shows a diagram of a parking brake circuit and a control conduit derived therefrom for the valve device in the by-pass conduit of the piston cylinder apparatus according to the invention.

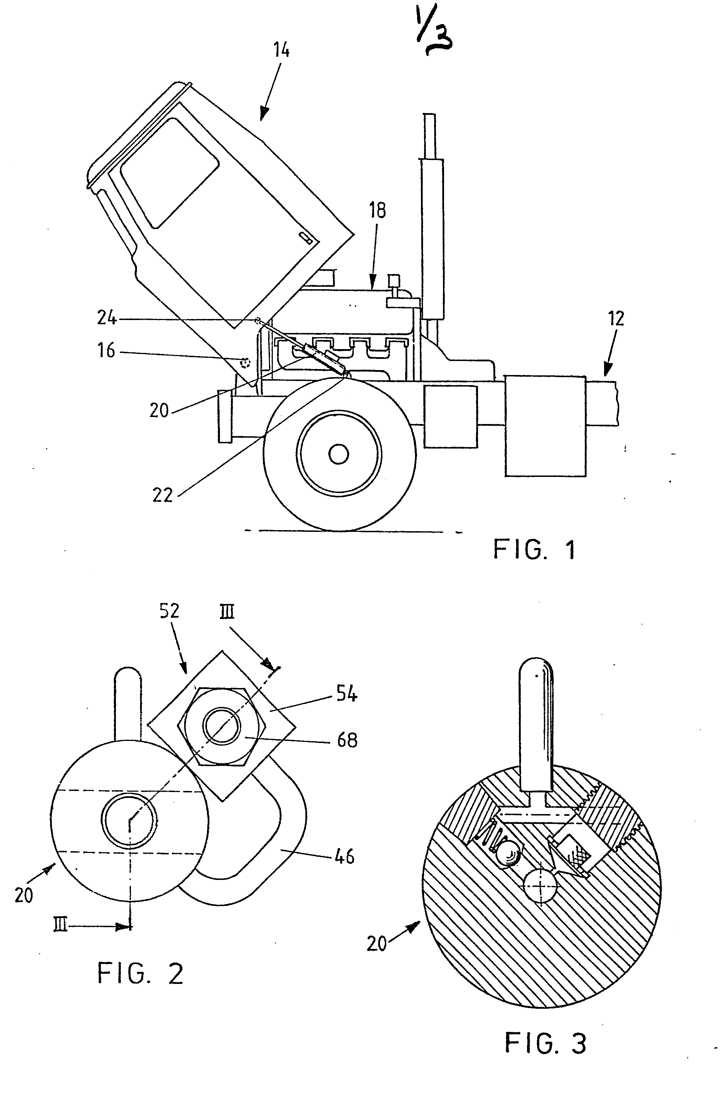

The tractor vehicle shown in Fig. 1 comprises a chassis 12 and a cab 14 which is pivotable around a shaft 16 in order to give access to the engine 18. The pivotal movement of the cab 14 is controlled by a hydraulic piston cylinder apparatus 20 which is pivotably connected at 22 and 24 to the frame and to the cab respectively. The actuation of the hydraulic piston cylinder apparatus takes place from a position on the chassis which is out of reach of the cab.

The hydraulic piston cylinder apparatus, shown in Fig. 2 to 5 in detail, is of a basic design known per se and is further explained below mainly in connection with the cooperation with the by-pass circuit 26 as proposed according to the invention.

The chamber 30 of the cylinder 28 is divided by the piston 36 into a "push chamber" 32 and a "pull chamber" 34. The piston rod 38 extends outwardly at one end of the cylinder 28 through a packing 40, a push port 42 and a pull port 44 being provided for supplying and discharging respectively of hydraulic liquid to and from respectively the push chamber 32 and the pull chamber 34. Exteriorly of the cylinder 28 a conduit 46 is provided whereby hydraulic fluid may flow from the pull chamber 34 to the pull port 44 and vice versa.

The by-pass circuit 26 extends from a first point 48 of the cylinder chamber 30 to a point 20 of said chamber being remote from said first point in axial direction. A remotely operable valving means 52 is provided in the by-pass circuit 26 through which the operator may selectively open or close the by-pass circuit 26.

The valving means 52 comprises a housing 54 having a bore 56 in which a valve spool 58 is slidable between a first position in which it blocks the by-pass circuit 26, and a second position in which the by-pass circuit 26 is open.

In the first or rest position shown in the drawing the valve spool 58 engages with its left end an annular end surface 62 of a connection plug 68 for hydraulic fluid which is screwed in the relative end of the housing 54. The valve spool is in this first position under the influence of a spring 66 acting on the right hand end of the valve spool, said spring engaging a plug 72 which is screwed in the right hand end of the valve housing 54.

The by-pass circuit 26 extends from the already mentioned first point 48 in the chamber 30 towards a first point 78 in the bore 56 and from the already mentioned second point 50 in the chamber 30 to a second point 80 in the bore 56. The valve spool 58 comprises a conduit 82 which connects the first point 78 in the bore 56 to the second point 80 when the spool is in its second position caused by pressure fluid supplied at the left hand end through the connection plug 68. In the embodiment shown the conduit 82 comprises an axial bore 84 and two radial bores 86 and 88 extending from said axial bore to the peripheral surface of the spool 58.

At the position of the said points 78 and 80 the valve housing 54 has annular relief channels 90 and 92 which communicate in the second or right hand end position of the valve spool 58 with the radial portions 86 and 88 of the conduit 82. Thus permits hydraulic fluid to flow from the pull chamber 34 through the segment of the by-pass circuit 26 situated at the pull chamber side to the annular relief channel 90 and from there through the radial bores 86, the axial bore 84 and the radial bores 88 to the annular relief channel 92, from which points the fluid flows through the segment of the by-pass circuit 26 situated at the push chamber side to push chamber 32.

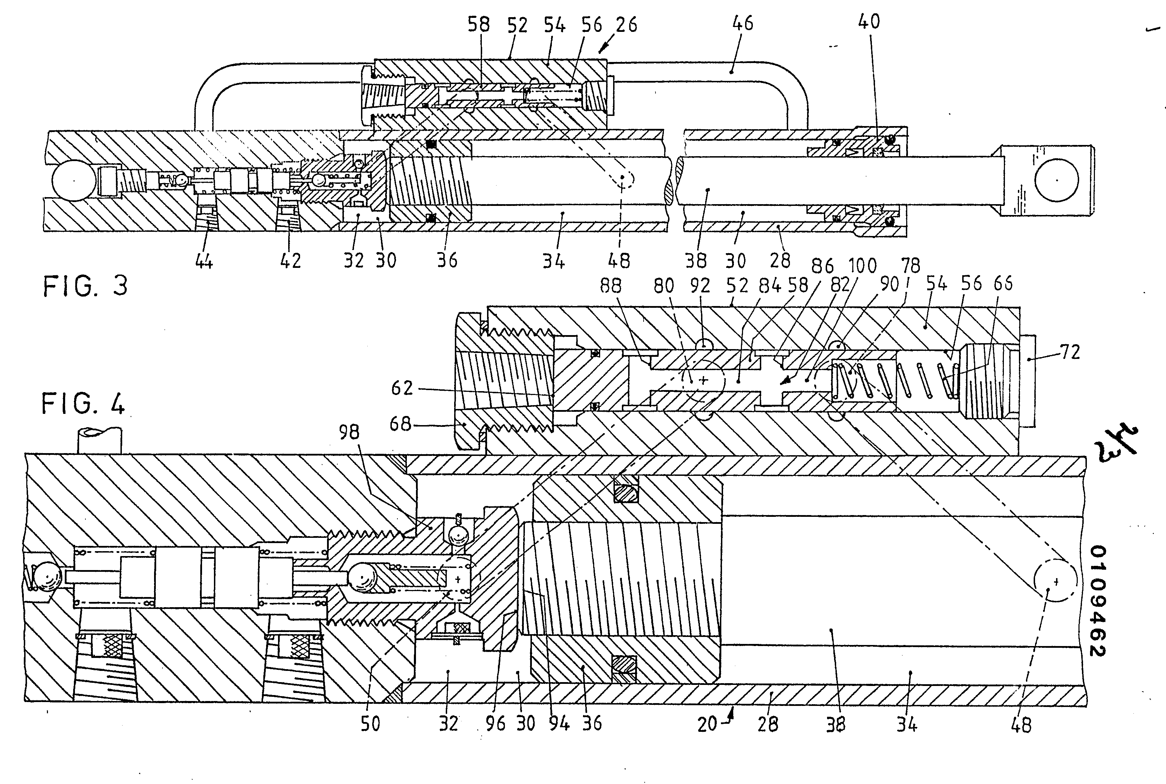

Since the housing is mounted stationarily (although preferably detachably) to the cylinder 28, the by-pass circuit remains open when the valve spool 58 is in its second position (right hand position in the drawing). This permits hydraulic fluid to flow from the pull chamber 34 to the push chamber 32 as the piston 36 and the piston rod 38 move to the right in Fig. 3 and 4, namely until the piston 36 blocks the entrance to the by-pass circuit 26 at point 48. Thereby the piston 36 is permitted to carry out a certain lost motion from its left retracted position according to Fig. 4, the point 48 constituting the right hand limit of this lost motion movement. The left hand limit is constituted by contact of the screw threaded end 94 of the piston rod 38 with an abutment surface 96 of the valve housing indicated by the reference number 98. Between said both limits the velocity whereby said lost motion movement can take place is a function of the narrowest section in the by pass circuit 26. Through local restrictions thereby the lost motion movement may be dampened to each desired extent.

In the illustrated embodiment the axial bore 24 communicates through an extension 100 with the right hand end of the valve housing bore 56. However, it may be desired to omit said connection and thereby the effect of the movements of, and of their pressure variations in the hydraulic fluid, on the valve spool 58 of the by-pass circuit 26.

It will be appreciated that the valving means 52 can be designed such that the circuit is either normally open or normally closed. Instead of a spring as resetting mechanism different means can be used for returning the valve spool 58 to the rest position.

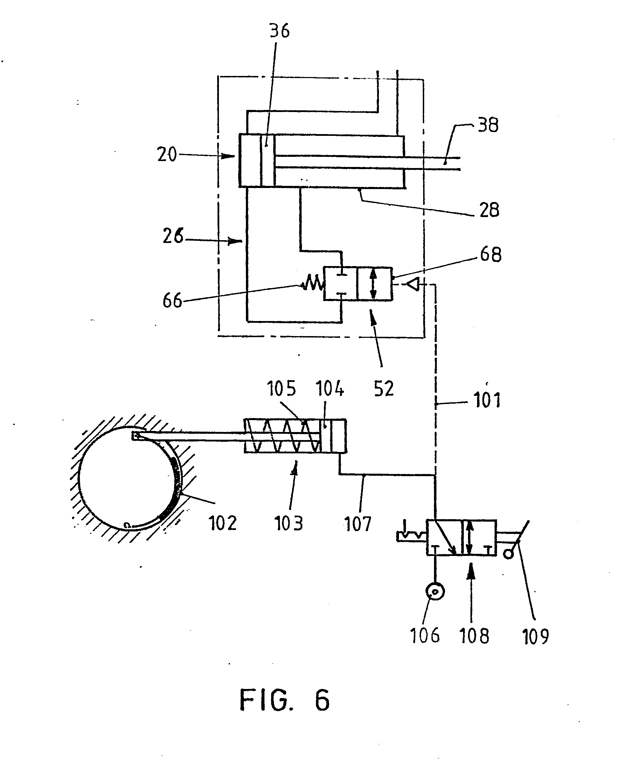

In the diagram according to Fig. 6 the piston cylinder apparatus 20 as described above is shown schematically. The valving means 52 communicates through the connecting plug 68 with a control conduit 101 which is derived from the air brake system of the vehicle, namely from the parking brake portion thereof. The parking brake has been schematically shown by the brake shoe 102 which is operable by a piston cylinder device 103. A spring 105 acting on the piston 104 at the piston rod side tends to draw the brake shoe 102 to the braking position.

By supplying compressed air to the cylinder chamber at the other side of the piston 104 through a conduit 107 communicating with a compressed air source 106 the brake show may be moved from the braking  or parking position to the inoperative position. Reference number 108 indicates an air valve which is actuatable by the usual hand brake lever 109 in the vehicle cab. Fig. 6 indicates the parking position; the hand brake lever 109 has been moved to the blocking position so that the air valve 108 interrupts the communication between the compressed air source 106 and the piston cylinder apparatus 103 whereafter the brake shoe is pulled to the  braking position by the spring 105. In this position likewise the control conduit 101 remains without pressure so that the valving means 52 remains closed. In this position the hydraulic piston cylinder apparatus 20 may be operated  for pivoting the cab.

It will be clear that as soon as the hand brake lever is released the valve 108 will open and thereby the brake shoe 102 is moved into its inoperative position. Simultaneously the valving means 52 is moved to the open position under the influence of the compressed air supplied to the control conduit 101, whereby the by-pass conduit 26 is opened. The system is then in the driving condition.

## C L A I M S

1. A hydraulic piston cylinder apparatus particularly suitable for moving a pivotable cab of a motor vehicle between a drive position and a pivoted position, comprising a by-pass conduit which communicates the cylinder spaces at both sides of the piston during part of the piston stroke, characterized in that a remotely operable valving means is provided in the by-pass conduit, whereby the by-pass conduit may be selectively opened and closed.

2. Apparatus according to claim 1, characterized in that a valving means is used comprising a connection for an operating fluid for moving the valve closure element to the open position, a resetting mechanism acting likewise on the valve closure element which normally pushes the valve closure element to its closed position.

3. Apparatus according to claim 1, characterized in that the resetting mechanism comprises a spring.

4. Apparatus according to claim 1, characterized in that the valving means is of the valve spool type.

5. Apparatus according to claims 2 to 4, characterized in that the valving means communicate with a derivation of the pneumatic energizing circuit of a compressed air braking system.

6. Apparatus according to claim 5, characterized in that the conduit which is connected with the valving means is derived from the pneumatic control conduit of a deblocking cylinder of a parking brake, in which control conduit an air valve, which is operable by a hand brake lever, is provided upstream of the point of derivation.

0109462

1/3

FIG. 1

FIG. 2

FIG. 3

0109462

FIG. 3

FIG. 4

0109462

FIG. 6

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | DE-A-2 945 585 (WEBER)<br>* Claims 1, 8, 9; figure 1, 2 * | 1,2,4 | B 62 D 33/06 |
| A | GB-A-2 079 378 (WEBER)<br>* Figure * | 1-4 | |
| A | DE-A-1 815 371 (DAIMLER-BENZ)<br>* Figures 1, 2 * | 5,6 | |
| D,A | DE-A-2 030 450 (DOMKRAFT) | | |
| D,A | NL-C- 161 401 (APPLIED POWER) | | |

TECHNICAL FIELDS SEARCHED (Int. Cl. ³)

B 62 D 33/00

The present search report has been drawn up for all claims

| Place of search<br>BERLIN | Date of completion of the search<br>29-06-1983 | Examiner<br>LUDWIG H J |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82